# EUROPEAN PATENT APPLICATION

(11) **EP 1 533 217 A1**
(43) Date of publication of application: **25.05.2005**
(21) Application number: 03791223.5
(22) Date of filing: 18.08.2003
(51) Int. Cl.: B62J 39/00

(54) **SELF-SUPPORTING AUTOMATIC VEHICLE**

(30) Priority: 28.08.2002 JP 2002247962
(71) Applicant: Furuki, Shinobu, Tokyo 166-0004 (JP)
(72) Inventor: SUZUKI, Hideo, Nishitamagun, Tokyo 190-1201 (JP)
(74) Representative: Jenkins, Peter David
(86) International application number: PCT/JP2003/010397
(87) International publication number: WO 2004/020270

(57) **Abstract**

The present invention provides a self-supporting vehicle capable of running in a self-supporting manner while controlling an attitude of a vehicle body in accordance with a requirement of a driver who stays still with respect to the vehicle body. When a two-wheeled vehicle (1) makes a left turn or a right turn as shown in Figs. 7, a vehicle body inclination sensor always detects a vehicle body inclination amount which corresponds to an acceleration at that time, an actuator generates a rotation torque corresponding to a result of this detection, a vehicle body (2) is inclined by a predetermined amount using a gyro moment generated in a vehicle body attitude control unit (6), an inclination direction of the vehicle body (2) is always brought into coincidence with a direction of a resultant force applied to the center of gravity of the vehicle body, and the vehicle can make a left turn while maintaining a balance between a moment based on a current centrifugal force, a moment based on the gravity and a gyro moment from the vehicle body attitude control unit (6). What A driver of the vehicle should do is only to stay still in the vehicle body (2) without transferring his or her weight.

## Description

### Field of the Invention

The present invention relates to a self-supporting vehicle which controls an attitude of a vehicle body by a gyro mechanism, and more particularly, to a self-supporting vehicle capable of running in a self-supporting manner while controlling an attitude of a vehicle body only by a driver's handlebars operation especially when making a right turn or a left turn.

### Background Art

A driver of a bicycle or a two-wheeled vehicle is compelled to maintain a running state by transferring his or her weight by himself or herself in addition to the operation of handlebars. Especially when driving the two-wheeled vehicle which is heavier than the bicycle on a curve at high speed, the driver is required to swiftly and precisely operate the handlebars and transfer his own height.

When the driver stops the vehicle to wait at traffic lights at an intersection or the like, or when the running speed is reduced and the current running state can not be maintained only by operating the handlebars or transferring the weight, the driver is compelled to put his or her feet on the ground to support the vehicle body in order to prevent the vehicle body from falling or turning over.

### Disclosure of the Invention

### Problem that this Invention is to solve

However, it is excessively strict to require all drivers, especially a driver who drives a two-wheeled vehicle on a curve at high speed, to drive the vehicle while swiftly and appropriately operating handlebars and transferring the weight because experience is required and such a driving is attended with risk.

It is excessively strict to compel a driver to put his or her feet on the ground to support the vehicle body in order to prevent the vehicle body from falling, especially when the vehicle is a two-wheeled heavy vehicle or when the driver is an elderly person or a woman.

It is an object of the present invention to provide a self-supporting vehicle capable of running in a self-supporting manner while controlling an attitude of a vehicle body in accordance with a requirement of a driver who stays still with respect to the vehicle body.

### Means for Solving the Problem

To achieve the above object, according to claim 1 of the present invention, there is provided a self-supporting vehicle comprising: a vehicle body attitude control unit having a rotor turnably supported by a rotor shaft, an inner gimbal for supporting the rotor shaft, and an outer gimbal for supporting the inner gimbal such that the inner gimbal can turn around an axis which is perpendicular to the rotor shaft; a steering direction detecting sensor that detects a handlebar steering direction when making a left or right turn, a vehicle body inclination amount detecting sensor that detects an inclination amount of a vehicle body; a first support member for turnably supporting one end of an outer gimbal shaft of the outer gimbal on the vehicle body; a second support member for turnably supporting the other end of the outer gimbal shaft of the outer gimbal on the vehicle body; an actuator for applying, to the outer gimbal shaft, a rotation torque corresponding to a detection signal of the steering direction detecting sensor and the vehicle body inclination amount detecting sensor; and a driving section for supplying a rotation driving force to the rotor, the driving section including a power source such as an internal combustion engine of a fuel cell.

Claim 2 of the present invention relates to a more concrete structure of the vehicle body attitude control unit for such a self-supporting vehicle, and the vehicle body attitude control unit comprises the rotor which is turnably supported by the rotor shaft which is in parallel to the center-of-gravity direction of the vehicle body, the inner gimbal which surrounds the rotor and supports opposite ends of the rotor shaft and is provided with a pair of inner gimbal shafts which are perpendicular to the rotor shaft, and the outer gimbal which surrounds the inner gimbal and turnably supports the inner gimbal through the inner gimbal shafts, and an axis of the outer gimbal is perpendicular to the rotor shaft and to the inner gimbal shafts and is in parallel to an advancing direction of the vehicle body.

In this self-supporting vehicle, when making a left turn at a certain speed, if the driver gently or swiftly turns the handlebars, the steering direction detecting sensor detects the handlebar steering direction and the steering angle, and the actuator applies a torque in the right rotation direction as viewed from behind the vehicle body to the outer gimbal shaft by the detection signal. Then, the precession is generated in the vehicle body attitude control unit by this torque, and a torque in the left rotation direction, i.e., a gyro moment is generated in this shaft. Thus, the vehicle body attitude control unit maintains the horizontal state which is a state before the driver turns the handlebars. On the other hand, this moment supplies a torque in the left rotation direction to the vehicle body through the first support member and the second support member, and the vehicle body inclines to the left. As the vehicle body inclines, a moment which tries to further incline the vehicle body to the left, and a gyro mechanism from the vehicle body attitude control unit 6 which tries to prevent this further inclination are applied to the vehicle body and at the same time, a moment which tries to incline the vehicle body to the right is also applied to the vehicle body by a centrifugal force based on a centrifugal acceleration (acceleration in a direction perpendicular to the advancing direction of the vehicle body).

The vehicle body inclination amount detecting sensor always detects the vehicle body inclination amount corresponding to the acceleration. The actuator applies a torque having a rotation direction and magnitude corresponding to the detection signal to the vehicle body attitude control unit. The gyro moment generated in the vehicle body attitude control unit inclines the vehicle body to a vehicle body inclination amount corresponding to the acceleration so that the inclination angle of the vehicle body is always brought into coincidence with a direction of a resultant force (sum of the gravity and centrifugal force) applied to the center of gravity of the vehicle body.

That is, the self-supporting vehicle can make a left turn in a state in which the inclination direction of the vehicle body always coincides with the direction of the resultant force applied to the center of gravity of the vehicle body and while maintaining the balance between the moment based on the current centrifugal force, the moment based on the gravity and the gyro mechanism generated in the vehicle body attitude control unit based on the rotation of the actuator.

Thus, the driver who operates the handlebars can make a left turn only by staying still with respect to the vehicle body without transferring his or her weight.

The driver can also make a right only by staying still with respect to the vehicle body in the same manner as that when making the left turn.

When the vehicle body tries to incline to the left or right by some reason during the straight running, if a torque in the left rotation direction or right rotation direction is applied to the vehicle body attitude control unit through the first support member and the second support member, the vehicle body attitude control unit generates a gyro mechanism in the right rotation direction or the left rotation direction balancing this torque, i.e., a torque which tries to incline the vehicle body to the left or right. Thus, when the vehicle body attitude control unit generates the gyro mechanism, the inclination of the vehicle body is prevented and the vehicle body can run straightly while keeping the balance.

When the attitude of the vehicle body is to be controlled, if an inertial force moment of the rotor around the rotor shaft is defined as J and the angular speed is defined as ω, the angular speed Ω of the precession generated in the vehicle body attitude control unit equal to T/Jω (T is a torque applied from outside). When the inertial force moment J is great and the angular speed ω is also great, the angular speed is extremely small. Thus, only a small precession is generated in the vehicle body attitude control unit with respect to the torque applied to the vehicle body attitude control unit from outside. On the other hand, a gyro mechanism balancing the torque T (=J*Δω)/Δt) is JωΩ. Thus, if the inertial force moment J and the angular speed ω are increased, the gyro mechanism is also increased and thus, it is possible to easily control the attitude of the vehicle body.

According to the self-supporting vehicle according to claim 3 of the present invention, when a state in which the vehicle body is inclined remains due to a deviated load generated in the vehicle body and/or due to a mechanical loss generated in the vehicle body attitude control unit, in order to eliminate this inclination state of the vehicle body, a balance weight provided on the centroidal line of the vehicle body is moved to an appropriate position of the vehicle body. With this, it is possible to solve a problem that although the vehicle runs straightly, the vehicle body remains inclined and a problem that a difference in speed or turning radius is generated when making a right turn and a left turn in the inclination state of the vehicle body.

According to the self-supporting vehicle according to claim 4 of the present invention, when the self-supporting vehicle is a two-wheeled vehicle, the vehicle further comprises a rotation number-detecting sensor for detecting the number of rotations of the rotor; a comparing/judging means for comparing and judging the number of rotations detected by the rotation number-detecting sensor with a predetermined number of rotations with each other; and an auxiliary wheel advancing/retracting unit for retracting auxiliary wheels disposed in the vehicle body into the vehicle body and for advancing the auxiliary wheels out from the vehicle body in accordance with a judgment result of the comparing/judging means.

Therefore, when the rotation number-detecting sensor detects the number of rotations of the rotor and the comparing/judging means compares the detected number of rotations and the predetermined number of rotations and judges that the detected number of rotations is smaller than the predetermined number of rotations, the auxiliary wheel advancing/retracting unit allows the auxiliary wheels to advance out from the vehicle body to prevent the vehicle body from falling.

The predetermined number of rotations which is reference of the judgment is determined while taking into consideration the magnitude of the inertial force moment and the weight of the vehicle body, but in the actual case, the predetermined number of rotations must be determined by repeating tests using an actual vehicle while taking the safety and reliability into consideration.

In a normal running state, the auxiliary wheels are retracted into the vehicle body, but even when the vehicle stops, if the number of rotations of the rotor is equal to or greater than the predetermined number of rotations, even if the vehicle body tries to incline to the left or right by some reason, a gyro mechanism which prevents this inclination is generated in the vehicle body attitude control unit as in the straight running state. Therefore, even if the auxiliary wheels remain retracted into the vehicle body, the vehicle body does not fall. Thus, the driver may stay still with respect to the vehicle body.

### Effect of the Invention

According to the self-supporting vehicle of the present invention, the vehicle can run in a self-supporting manner while controlling the attitude of the vehicle body in accordance with a driver's requirement who stays still with respect to the vehicle body. Therefore, it becomes easy to drive the vehicle.

According to the self-supporting vehicle of the invention, it is possible to solve a problem that an inclination state of the vehicle body remains due to a deviated load caused in the vehicle body and/or due to mechanical loss generated in the vehicle body attitude control unit. It is also possible to solve a problem that an inclination state of the vehicle body remains even during straight running.

According to the self-supporting vehicle of the invention, when the self-supporting vehicle is a two-wheeled vehicle, the vehicle can run in a self-supporting manner in accordance with a requirement of a driver who stays still with respect to the vehicle body, and the driver is not compelled to support the vehicle body to prevent the vehicle body from falling. Therefore, a burden on the driver during driving is reduced.

### Brief Description of the Drawings

Fig. 1 is a schematic perspective view of a self-supporting two-wheeled vehicle according to an embodiment;
Fig. 2 is a partially sectional plan view of a section of the vehicle which controls an attitude of the vehicle body shown in Fig. 1;
Fig. 3 is a partially sectional side view of Fig. 2;
Fig. 4 shows a structure of the self-supporting two-wheeled vehicle for comparing and judging the number of rotations of a rotor of the vehicle;
Fig. 5 is a sectional view of a vehicle body inclination sensor of the self-supporting two-wheeled vehicle;
Fig . 6 are diagrams for explaining a straight running state and a stop state of the self-supporting two-wheeled vehicle;
Fig . 7 are diagrams for explaining a light turn or a right turn of the self-supporting two-wheeled vehicle; and
Fig . 8 are diagrams for explaining a motion of another self-supporting two-wheeled vehicle of the embodiment.

### Description of reference numerals

- 1, 40: self-supporting two-wheeled vehicle
- 2: vehicle body
- 5: driving section
- 6: vehicle body attitude control unit
- 10: steering angle sensor (steering direction detecting sensor)
- 11: vehicle body inclination sensor (vehicle body inclination amount detecting sensor)
- 14: auxiliary wheels advancing/retracting unit
- 15: rotor
- 15a: rotor shaft
- 16: inner gimbal
- 16a, 16b: inner gimbal shaft
- 17: outer gimbal
- 17a: one end (of outer gimbal shaft)
- 17b: other end (of outer gimbal shaft)
- 18: magnet sensor (rotation number-detecting sensor)
- 20: comparator (comparing/judging means)
- 21: first support member
- 22: actuator
- 23: second support member
- 41: balance weight

### Best Mode for Carrying Out the Invention

One example of a self-supporting vehicle according to an embodiment of the present invention will be explained with reference to the drawings.

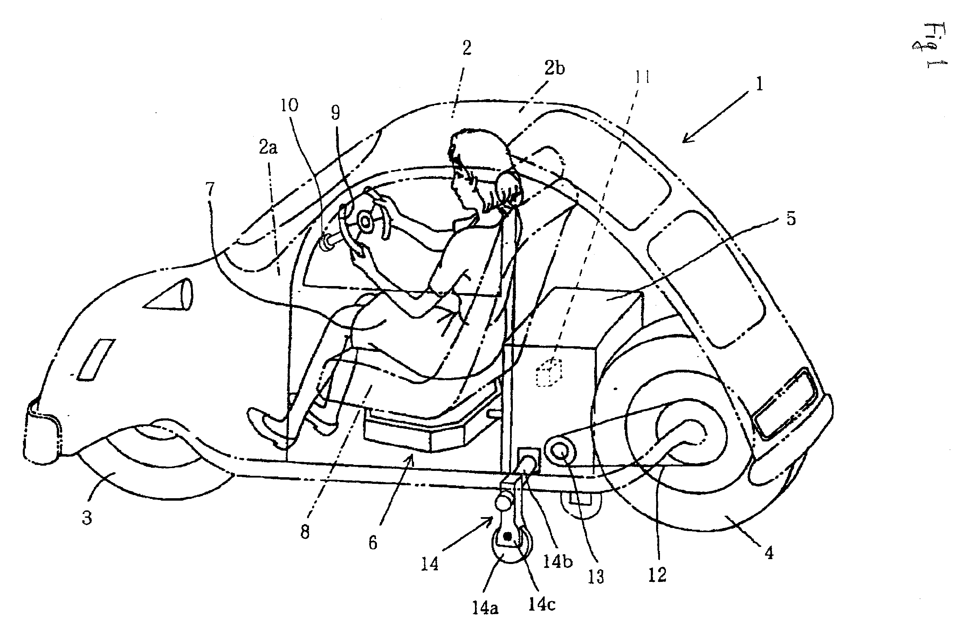

The present invention will be explained based on a self-supporting two-wheeled vehicle. As shown in Fig. 1, a vehicle body 2 of the self-supporting two-wheeled vehicle 1 is supported by a front wheel 3 and a rear wheel 4. Provided in the vehicle body 2 are a driving section 5 having a power source such as an internal combustion engine or a fuel cell, a vehicle body attitude control sensor 6 disposed at a center of the vehicle body 2 and connected to a front portion of the of the driving section 5, a seat 8 for a driver 7 disposed at the center of the vehicle body 2 and immediately above the vehicle body attitude control sensor 6, handlebars 9 disposed in front of the driver's seat 8 and used by the driver 7 for making a left turn or a right turn, a steering angle sensor (steering direction detecting sensor) 10 for detecting a steering direction of the handlebars 9, and a vehicle body inclination sensor (vehicle body inclination amount detecting sensor) 11 for detecting an inclination amount of the vehicle body 2.

The driving section 5 is provided with a drive shaft 13 which transmits a power of the driving section 5 to the rear wheel 4 through a chain 12. The driving section 5 is also provided auxiliary wheel advancing/ retracting unit 14 for retracting a pair of auxiliary wheels 14a into the vehicle body 2 and advancing the wheels 14a out from the vehicle body 2.

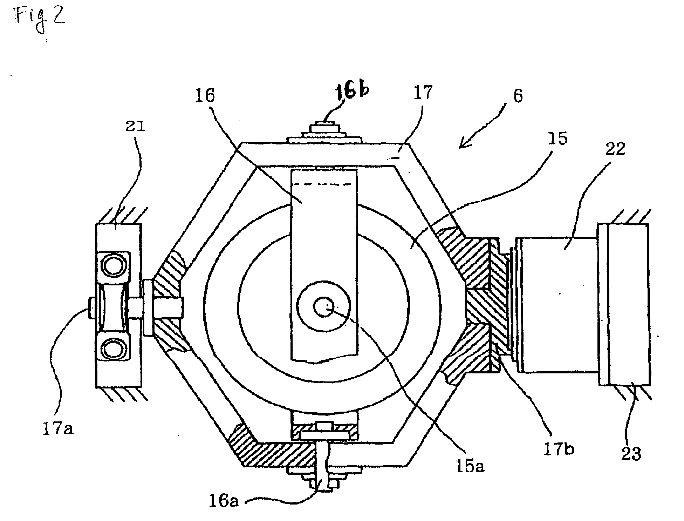

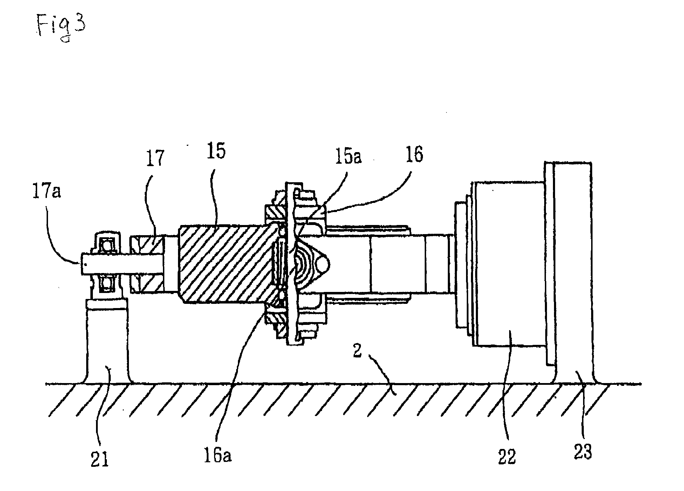

As shown in Figs. 2 and 3, the vehicle body attitude control unit 6 includes a rotor 15 which is turnably supported by a rotor shaft 15a. The rotor shaft 15a is in parallel to the center-of-gravity direction of the vehicle body 2. The vehicle body attitude control unit 6 also includes an inner gimbal 16 which surrounds the rotor 15, and which supports opposite ends of the rotor shaft 15a, and which is provided with a pair of inner gimbal shafts 16a and 16b arranged perpendicular to the rotor shaft 15a. The vehicle body attitude control unit 6 also includes an outer gimbal 17 which surrounds the inner gimbal 16 and turnably supports the inner gimbal 16 through the inner gimbal shafts 16a and 16b. An axis of the outer gimbal 17 is perpendicular to the rotor shaft 15a and the inner gimbal shafts 16a and 16b, and is in parallel to the advancing direction of the vehicle body 2.

The vehicle body attitude control unit 6 is called a vertical gyro having a so-called 2 degrees of freedom. The rotor shaft 15a is adjusted such that the rotor shaft 15a is in parallel to the centroidal axis direction of the vehicle body 2, i.e., such that the rotor shaft 15a is perpendicular to the road surface in a state where the vehicle body 2 is not inclined, i.e., where the vehicle body 2 is perpendicular to the road surface.

The rotor 15 is rotatably supported by the rotor shaft 15a. The rotor 15 is rotated by a battery (not shown) of the driving section 5 as a driving source. The rotor shaft 15a serving as a stator and the rotor 15 serving as a rotor formed outside the rotor shaft 15a constitute a so-called outer rotor type motor.

The method for rotating the rotor 15 is not limited to the above-described electrical method, and it may be a mechanical method using a belt or chain.

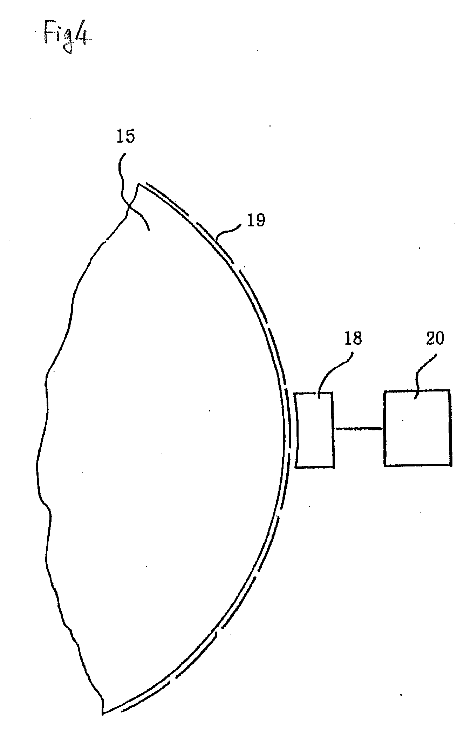

As shown in Fig. 4, a magnet sensor (rotation number-detecting sensor) 18 comprising a coil or a magnetic resistance element is disposed in the vicinity of the rotor 15. Magnetic mediums 19 are disposed around the outer periphery of the rotor 15 at equal distances from one another. The magnet sensor 18 is connected to a comparator (comparing/judging unit) 20. Thus, if the magnet sensor 18 detects magnetic flux variation caused when the rotor 15 rotates, the rotation number of the rotor 15 is detected, and the comparator 20 can compare and judge the detected rotation number with predetermined rotation number. Based on the judgment result, the auxiliary wheel advancing/retracting unit 14 can allow the auxiliary wheels 14a to retract into the vehicle body 2 or to advance out from the vehicle body 2.

The sensor for detecting the rotation number of the rotor 15 is not limited to the magnetic encoder, and the sensor may be an optical encoder, a rotary potentiometer, a tachometer generator or the like, of course.

As shown in Figs. 2 and 3, in the vehicle body attitude control unit 6, one end 17a of an outer gimbal shaft is turnably supported by a first support member 21 with respect to the vehicle body 2. In this embodiment, the other end 17b of the outer gimbal shaft is connected to a rotor of an actuator 22 of the driving section 5, and a stator of the actuator 22 is supported by a second support member 23. Thus, the other end 17b of the outer gimbal shaft is turnably supported by the second support member 23 with respect to the vehicle body 2. The first support member 21 and the second support member 23 are fixed to the vehicle body 2.

The actuator 22 supplies rotation torque based on a control signal from the steering angle sensor 10 or the later-described vehicle body inclination sensor 11 to the outer gimbal shaft. If the actuator 22 can supplies the rotation torque to the outer gimbal shaft, the actuator 22 may be any of electric actuator, hydraulic actuator and air pressure actuator, of course.

Although the vehicle body attitude control unit 6 is disposed immediately in front of the driving section 5 in this embodiment, the position of the vehicle body attitude control unit 6 is not limited to this, and the unit 6 may be disposed in any place only if handling comfort, safety of the vehicle and safety of a driver 7 of the rotor 15 which rotates at high speed can be secured. A plurality of vehicle body attitude control units 6 may be disposed in series.

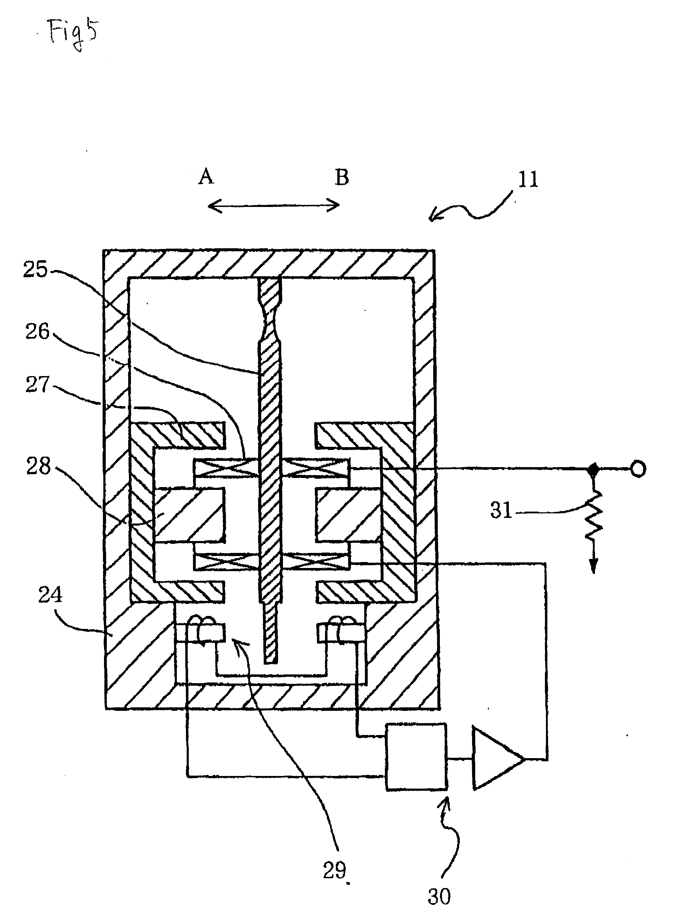

As shown in Fig. 5, the vehicle body inclination sensor 11 includes a pendulum 25 attached to an upper surface of the case 24 such that the pendulum 25 can rock, a coil 26 fixed to a lower portion of the pendulum 25, a yoke 27 fixed to a side surface of the case 24, and a magnet 28 disposed on the yoke 27 such that the magnet 28 magnetically engages with the coil 26. The vehicle body inclination sensor 11 also includes a displacement detector 29 having magnetic elements which are opposed to a lowermost end of the pendulum 25, a servo amplifier 30 having an input side connected to the displacement detector 29 and an output side connected to the coil 26, and a reading resistor 31 for taking out current flowing through the coil 26 as output voltage.

In the vehicle body inclination sensor 11, when making a left or right turn, if acceleration in a direction A or B is applied to the vehicle body 2, the pendulum 25 tries to move in the opposite direction by an inertial force. This movement is detected by the displacement detector 29, current is allowed to flow through the coil 26 by a detection signal to return the pendulum 25 to its original position, thereby bringing this movement and a force of the acceleration into balance, and the current at that time is taken out as the output voltage through the reading resistor 31. This taken out output voltage is proportional to the magnitude of the acceleration, and the inclination amount of the pendulum 25 (=inclination amount of the vehicle body 2) is also proportional to the magnitude of the acceleration. Therefore, it is possible, by this output voltage, to detect the vehicle body inclination amount which corresponds to acceleration for inclining the vehicle body 2.

Although the rocking type acceleration sensor is used as the vehicle body inclination sensor 11 in this embodiment, the sensor 11 may be a strain gage using a silicon semiconductor of course.

The steering angle sensor 10 may be an electromagnetic or optical ptoelectric sensor, or a semiconductor sensor using a Hall element, only if the sensor can detect the steering direction and the steering angle of the handlebars 9 which are operated when the driver 7 makes a left or right turn.

The mechanism of the auxiliary wheel advancing/retracting unit 14 is not especially limited only if the unit 14 can retract the pair of auxiliary wheels 14a into the vehicle body 2 and advance the wheels out from the vehicle body 2. In this embodiment, as shown in Fig. 1, a caster 14c having the auxiliary wheel 14a is connected to an arm 14b extending from the driving section 5, and the auxiliary wheel 14a is retracted into the vehicle body 2 or advanced out from the vehicle body 2 by rotating the arm 14b.

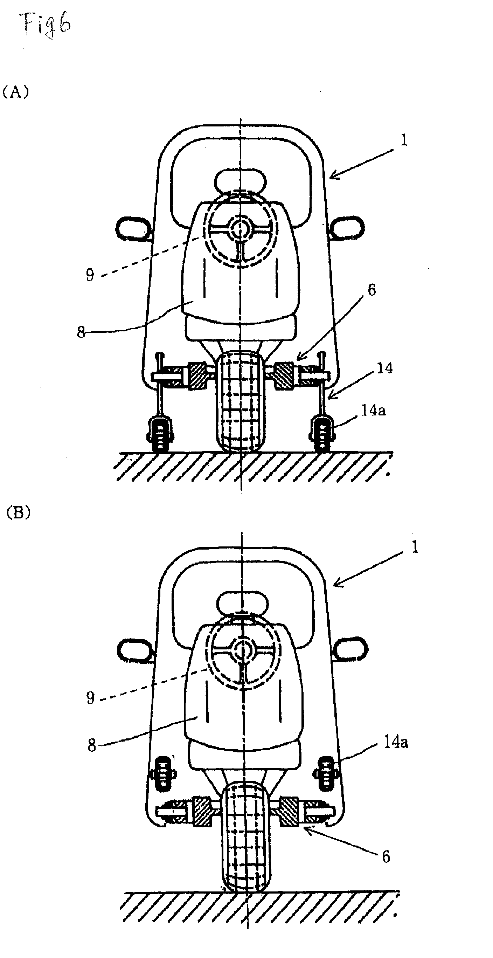

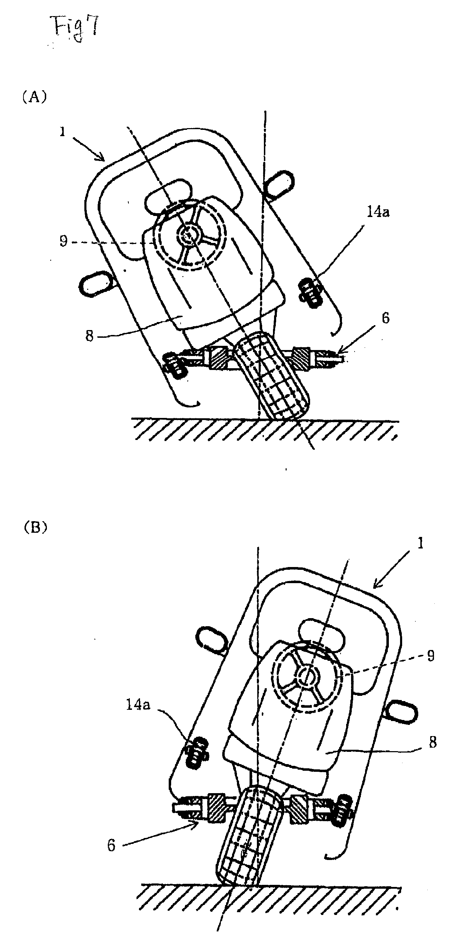

Next, operation of the self-supporting two-wheeled vehicle 1 having the above-described structure will be explained with reference to Figs. 6 and 7. The self-supporting two-wheeled vehicle 1 has the same function and performance as those of the conventional two-wheeled vehicle and can run in the same manner. Here, only straight running and left or right turning of the vehicle 1 will be explained.

First, the operation or action from the start to the stop of the two-wheeled vehicle 1 through the straight running will be explained.

When the vehicle stops, as shown in Fig. 6(A), the auxiliary wheels 14a advance out from the vehicle body 2 and come into contact with the road surface to prevent the vehicle body 2 from falling.

Then, the driver 7 seats on the driver's seat 8 and grasps the handlebars 9, and starts the driving section 5 by a starter or the like, and the rotor 15 starts rotating. The magnet sensor 18 detects the rotation number of the rotor 15. The comparator 20 compares this rotation number with the predetermined rotation number and if the comparator 20 judges that the detected rotation number is greater than the predetermined rotation number, the auxiliary wheel advancing/retracting unit 14 retracts the auxiliary wheels 14a into the vehicle body 2, and the two-wheeled vehicle 1 is brought into a state shown in Fig. 6(B) while maintaining a so-called idling state.

Even in this idling state, if the rotation number of the rotor 15 is greater than the predetermined rotation number, the vehicle body 2 tries to incline to the left or right, and a torque (external force) in a left rotating direction or in a right rotation direction is applied to the vehicle body attitude control unit 6 through the first support member 21 and the second support member 23. If this torque is applied, a gyro moment in the right rotation direction or the left rotation direction balancing this torque, i.e., a torque inclining the vehicle body 2 to the left or right is generated. Therefore, the vehicle body 2 is prevented from being inclined, and even if the auxiliary wheels 14a remain retracted in the vehicle body 2, the vehicle body 2 does not fall. What the driver 7 must to do is only to seat on the driver's seat 8 and grasp the handlebars 9.

The vehicle body inclination sensor 11 always detects the vehicle body inclination amount. If a balance between a moment based on the external force and a gyro moment from the vehicle body attitude control unit 6 (also including a moment based on the gravity applied to the vehicle body 2) is lost, the vehicle body inclination sensor 11 provides the actuator 22 with rotation instructions in a predetermined direction, increases or reduces the gyro moment generated in the vehicle body attitude control unit 6 so that the vehicle body 2 is not inclined to the left nor right and the perpendicular or vertical state of the vehicle body 2 with respect the road surface is maintained.

From such a state, the driver 7 can drive the vehicle straightly by operating a clutch or the like in the same manner as that of the conventional two-wheeled vehicle.

Even if the vehicle body 2 inclines to left or right during the straight running, since the gyro moment which prevents the vehicle body 2 from being inclined to the left or right is generated in the vehicle body attitude control unit 6 as in the same manner as described above, the driver 7 needs not transfer his or her weight and may stay still to the vehicle body 2. In such a case also, the vehicle body inclination sensor 11 always detects the vehicle body inclination amount, and if the balance between the moments is lost, the vehicle body inclination sensor 11 increases or reduces the gyro moment to maintain the vehicle body 2 in the perpendicular state with respect to the road surface.

Next, the left and right turning operations of the two-wheeled vehicle 1 will be explained with reference to Figs. 7.

Fig. 7(A) shows the vehicle body when making a left turn as viewed from behind, and Fig. 7(B) shows the vehicle body when making a right turn as viewed from behind.

When the two-wheeled vehicle 1 makes a left turn, if the driver 7 gently or abruptly turns the handlebars 9 to the left, the steering angle sensor 10 detects the steering direction and the steering angle of the handlebars 9, the actuator 22 applies a torque in the right rotation direction as viewed from behind the vehicle body 2 to the one end 17a and the other end 17b of the outer gimbal shaft by the detection signal. Then, precession is generated in the vehicle body attitude control unit 6 by this torque, a torque in the left rotation direction, i.e., the gyro moment is generated in the shaft. Therefore, the vehicle body attitude control unit 6 maintains a horizontal state which is a state before turning the handlebars 9. On the other hand, by this moment, a torque in the left rotation direction is applied to the vehicle body 2 through the first support member 21 and the second support member 23, and the vehicle body 2 is inclined to the left. As the vehicle body 2 inclines in this manner, a moment which tries to further incline the vehicle body 2 to the left by the gravity, and a gyro moment from the vehicle body attitude control unit 6 which tries to prevent the further inclination are supplied to the vehicle body 2, and a moment which tries to incline the vehicle body to the right by a centrifugal force based on the centrifugal acceleration, i.e., a moment which tries to prevent the inclination of the vehicle body 2 is applied to the vehicle body 2.

The vehicle body inclination sensor 11 always detects the vehicle body inclination amount which corresponds to the acceleration, and the actuator 22 generates a torque having a rotation direction and magnitude corresponding to the detection signal. When the vehicle body inclination amount corresponding to the current acceleration is not sufficient for example, if the vehicle body inclination sensor 11 provides the actuator 22 with predetermined rotation instructions, a torque in the left rotation direction is applied to the vehicle body 2 based on the gyro moment generated in the vehicle body attitude control unit 6, and the vehicle body 2 inclines by a vehicle body inclination amount corresponding to this acceleration. The two-wheeled vehicle 1 makes a left turn while maintaining the balance between a moment based on the centrifugal force of at that time, a moment based on the gravity and a gyro moment from the vehicle body attitude control unit 6 (Fig. 7(A)).

If the driver 7 further turns the handlebars 9 to the left, the steering angle sensor 10 detects this operation, a gyro moment corresponding to the increased torque from the actuator 22 is generated in the vehicle body attitude control unit 6, and the vehicle body 2 further inclines to the left based on this moment. If the vehicle body inclination amount corresponding to the acceleration of that time is excessively great, a gyro moment corresponding to a reduced torque from the actuator 22 is generated, and the vehicle body 2 rotates to the right so as to correspond to the current acceleration based on this moment, thereby correcting the vehicle body inclination amount.

In the two-wheeled vehicle 1, the vehicle body inclination sensor 11 always detects the vehicle body inclination amount corresponding to the current acceleration, and a rotation torque corresponding to the detection result is generated from the actuator 22, the vehicle body 2 is inclined by a predetermined amount by the gyro moment generated in the vehicle body attitude control unit 6, the inclination direction of the vehicle body 2 is brought into coincidence with a direction of a resultant force applied to the center of gravity of the vehicle body, the vehicle can make a left turn while maintaining the balance between a moment based on the centrifugal force of at that time, a moment based on the gravity and a gyro moment from the vehicle body attitude control unit 6. Thus, the driver 7 may only stay still in the vehicle body 2 without transferring his or her weight.

When the vehicle makes a right turn, the vehicle body attitude is controlled in the same manner as that required when making the left turn. Thus, the vehicle body 2 is inclined to the right as viewed from behind (Fig. 7(B)), and the driver 7 may only stay still in the vehicle body 2 without transferring his or her weight.

Here, the resultant force applied to the center of gravity of the vehicle body is a resultant force of the centrifugal force caused by the centrifugal acceleration and the gravity applied to the center of gravity of the vehicle body.

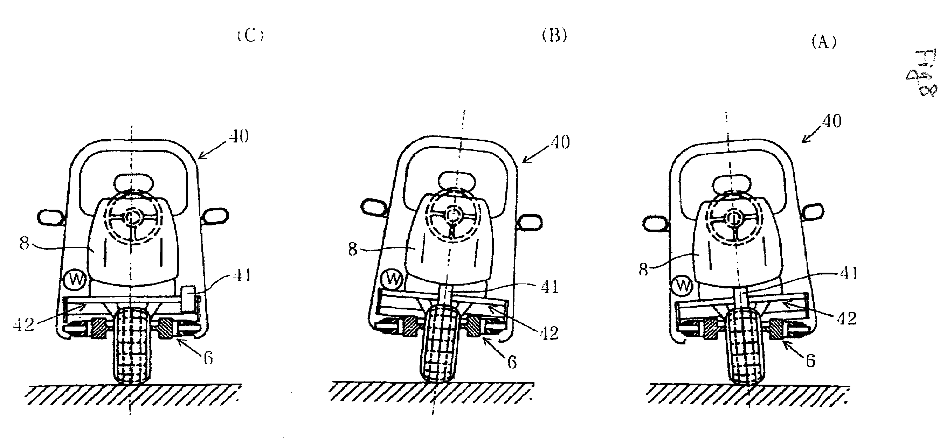

When the vehicle body 2 runs straightly for example, even if the vehicle body 2 inclines to the left or the right, the vehicle body attitude control unit 6 generates the gyro moment which prevents this. Thus, the vehicle body 2 can run straightly while maintaining the perpendicular state with respect to the road surface as described above. However, when a deviated load W keeps applying to the vehicle body 2 as shown in Fig. 8(A), there is caused a problem that even if the vehicle runs straightly, the vehicle remains inclined. Thus, it is necessary to solve this problem. One example of this solving method of this problem will be explained with reference to Figs. 8(A) to (C) using a self-supporting two-wheeled vehicle 40 having a balance weight 41. Figs. 8 show the vehicle body as viewed from behind.

When the vehicle body 2 runs straightly, if the deviated load W is applied to a left end of the vehicle body 2 and the vehicle body 2 inclines to the left, a gyro moment in the right rotation direction balancing this torque, i.e., a torque which tries to incline the vehicle body 2 to the right is generated, and unbalance generated by a moment based on the deviated load W (also including a moment based on the gravity applied to the vehicle body 2) is canceled. At that time, since the unbalance is canceled, the vehicle body 2 inclines to the right as shown in Fig. 8(B). However, it is unnatural to run straightly in this rightward inclining state. Thus, when the inclination amount remains in the vehicle body 2, i.e., when the vehicle body 2 remains inclined to the right in this embodiment, in order to bring the vehicle body 2 perpendicular to the road surface, the balance weight 41 provided on the centroidal line of the vehicle body 2 is moved to a right end of the vehicle body 2 by a ball screw mechanism 42 for example as shown in Fig. 8(C), a torque which tries to incline the vehicle body 2 to the left is generated in the vehicle body attitude control unit 6, thereby allowing the vehicle body 2 to maintain the perpendicular state to the road surface. With this, it is possible to solve the problem that although the vehicle runs straightly, the vehicle body 2 remains inclined. The mechanism for moving the balance weight 41 is not limited to the ball screw mechanism 42 as in this embodiment, and the balance weight 41 may be moved like a pendulum.

The balance weight 41 before it moves is located on the centroidal line of the vehicle body 2 in the state where the vehicle body 2 is perpendicular to the road surface as shown in Figs. 8(A) and (B).

When the vehicle body 2 runs straightly, even if the vehicle body 2 inclines to the left or the right, the vehicle body attitude control unit 6 generates the gyro moment which prevents this. Thus, the vehicle body 2 can run straightly while maintaining the perpendicular state with respect to the road surface, but due to a mechanical loss generated in the vehicle body attitude control unit 6, there is cause, in some cases, a problem that the inclination amount remains in the vehicle body 2 or the inclination amount is gradually increased. Thus, such a problem must be solved. As one method for solving the problem, the balance weight 41 may be moved by the ball screw mechanism 42.

That is, if the vehicle body 2 tries to incline to the left or the right and a torque (external force) in the left rotation direction or the right rotation direction is applied to the vehicle body attitude control unit 6, a gyro moment in the right rotation direction or the left rotation direction balancing this torque, i.e., a torque for inclining the vehicle body 2 to the right or left is generated in the vehicle body attitude control unit 6. The vehicle body inclination sensor 11 always detects the vehicle body inclination amount, and when the balance between these torques is lost, since the gyro moment generated in the vehicle body attitude control unit 6 is increased or reduced, the vehicle body 2 is maintained in the perpendicular state with respect to the road surface. However, when the inclination of the vehicle body is not corrected and the inclination amount remains due to the mechanical loss of the vehicle body attitude control unit 6 or the inclination amount is gradually increased in one direction, the vehicle body 2 is inclined as shown in Fig. 8(B) for example. It is unnatural for the vehicle to run straightly in this state. Thus, in order to bring the vehicle body 2 perpendicular to the road surface, the balance weight 41 provided on the centroidal line of the vehicle body 2 is moved to an appropriate position of the vehicle body 2 by the ball screw mechanism 42, thereby maintaining the vehicle body 2 in the perpendicular state with respect to the road surface. With this, it is possible to solve the problem that although the vehicle runs straightly, the vehicle body 2 remains inclined.

As described above, if a rotation torque T is applied to the vehicle body attitude control unit 6 by the actuator 22, the vehicle body attitude control unit 6 generates a gyro moment balancing this rotation torque T. In this case, the angular speed Ω of the precession generated in the vehicle body attitude control unit 6 can be found by an equation of Ω=T/Jω (wherein J is an inertial force moment of the rotor 15 around the rotor shaft 15a, and ω is the angular speed), if the inertial force J is great and the angular speed ω is great, the angular speed Ω is extremely small. In such a case, the vehicle body attitude control unit 6 is not inclined almost at all, and the vehicle body can maintain its perpendicular state with respect to the road surface. Since the gyro moment can be obtained by the JωΩ, the gyro moment is extremely great, and it is possible to easily control the attitude of the vehicle body 2 .

The vehicle body of the conventional two-wheeled vehicle is not provided with a side member of roof for protecting the driver from wind and rain. If the two-wheeled vehicle 1 is provided with a side member 2a and a roof 2b as shown in Fig. 1, habitability for the driver 7 is enhanced. Two people can ride on the two-wheeled vehicle 1 like the conventional two-wheeled vehicle.

Although the self-supporting vehicle has been explained based on the self-supporting two-wheeled vehicle in this embodiment, the vehicle may be a three-wheeler having two rear wheels.

### Industrial Applicability

The self-supporting vehicle can run in the self-supporting manner while controlling the attitude of the vehicle body in accordance with requirement of a driver who stays still with respect to the vehicle body. Therefore, any one can drive the vehicle without depending upon a driving technique of the driver. When the self-supporting vehicle is a two-wheeled vehicle having two wheels, the vehicle can run in the self-supporting manner and in addition, the driver is not compelled to support the vehicle body for preventing the vehicle body from falling. Thus, a burden on the driver at the time of driving of the vehicle is reduced, and this vehicle is preferable especially when the driver is an elderly person, a woman or a disabled person.

## Claims

1. A self-supporting vehicle comprising:
a vehicle body attitude control unit having a rotor turnably supported by a rotor shaft, an inner gimbal for supporting the rotor shaft, and an outer gimbal for supporting the inner gimbal such that the inner gimbal can turn around an axis which is perpendicular to the rotor shaft;
a steering direction detecting sensor that detects a handlebar steering direction when making a left or right turn,
a vehicle body inclination amount detecting sensor that detects an inclination amount of a vehicle body;
a first support member for turnably supporting one end of an outer gimbal shaft of the outer gimbal on the vehicle body;
a second support member for turnably supporting the other end of the outer gimbal shaft of the outer gimbal on the vehicle body;
an actuator for applying, to the outer gimbal shaft, a rotation torque corresponding to a detection signal of the steering direction detecting sensor and the vehicle body inclination amount detecting sensor; and
a driving section for supplying a rotation driving force to the rotor.

2. The self-supporting vehicle according to claim 1, wherein the vehicle body attitude control unit comprises the rotor which is turnably supported by the rotor shaft which is in parallel to the center-of-gravity direction of the vehicle body, the inner gimbal which surrounds the rotor and supports opposite ends of the rotor shaft and is provided with a pair of inner gimbal shafts which are perpendicular to the rotor shaft, and the outer gimbal which surrounds the inner gimbal and turnably supports the inner gimbal through the inner gimbal shafts, and an axis of the outer gimbal is perpendicular to the rotor shaft and to the inner gimbal shafts and is in parallel to an advancing direction of the vehicle body.

3. The self-supporting vehicle according to claim 1 or 2, wherein when a state in which the vehicle body is inclined remains due to a deviated load generated in the vehicle body and/or due to a mechanical loss generated in the vehicle body attitude control unit, in order to eliminate this inclination state of the vehicle body, a balance weight provided on the centroidal line of the vehicle body is moved to an appropriate position of the vehicle body.

4. The self-supporting vehicle according to any one of claims 1 to 3, further comprising:
a rotation number-detecting sensor that detects the number of rotations of the rotor;
a comparing/judging means for comparing and judging the number of rotations detected by the rotation number-detecting sensor with a predetermined number of rotations with each other; and
an auxiliary wheel advancing/retracting unit for retracting auxiliary wheels disposed in the vehicle body into the vehicle body and for advancing the auxiliary wheels out from the vehicle body in accordance with a judgment result of the comparing/judging means.
